# EUROPÄISCHE PATENTSCHRIFT

(11) **EP 2 920 120 B1**
(45) Veröffentlichungstag und Bekanntmachung des Hinweises auf die Patenterteilung: **07.06.2017**
(21) Anmeldenummer: 13786277.7
(22) Anmeldetag: 06.11.2013
(51) Int. Cl.: B01D 61/44, C02F 1/461, C02F 1/469, C02F 1/46, B01D 61/42

(54) **VERFAHREN UND VORRICHTUNG ZUR ENTSALZUNG WÄSSRIGER LÖSUNGEN MITTELS ELEKTRODIALYSE**
METHOD AND DEVICE FOR DESALTING AQUEOUS SOLUTIONS BY MEANS OF ELECTRODIALYSIS
PROCÉDÉ ET DISPOSITIF DE DÉSALINISATION DE SOLUTIONS AQUEUSES PAR ÉLECTRODIALYSE

(30) Priorität: 15.11.2012 DE 102012220908
(43) Veröffentlichungstag der Anmeldung: 23.09.2015
(73) Patentinhaber: Fraunhofer-Gesellschaft zur Förderung der angewandten Forschung e.V., 80686 München (DE)
(72) Erfinder: EGNER, Siegfried, 74740 Adelsheim (DE); KAROS, Alexander, 22846 Norderstedt (DE); WINKLER, Eberhard, 01069 Dresden (DE); FOERSTER, Hans-Juergen, 06749 Bitterfeld (DE)
(74) Vertreter: DREISS Patentanwälte PartG mbB
(86) Internationale Anmeldenummer: PCT/EP2013/073131
(87) Internationale Veröffentlichungsnummer: WO 2014/075965

(56) Entgegenhaltungen:
- US-A- 3 893 901
- US-A1- 2012 279 861
- US-B1- 6 402 917

## Beschreibung

Die Erfindung betrifft ein Verfahren und eine Vorrichtung zur Entsalzung wässriger Lösungen mittels Elektrodialyse.

In der industriellen Produktion oder bei der Reinigung werden wässrige Lösungen wie beispielsweise Säuren und Laugen eingesetzt. Um diese sauren oder basischen wässrige Lösungen entsorgen zu können, müssen diese zuvor neutralisiert werden. Damit ist ein sicherer Umgang gewährleistet und die gesetzlich vorgeschriebenen Richtlinien für das Einleiten von Flüssigkeiten in die Kanalisation werden eingehalten.

Üblicherweise geschieht die Neutralisation der wässrigen sauren oder basischen Lösungen durch Zugabe von Laugen oder Säuren, die einen entsprechenden pH-Wert aufweisen, so dass dabei eine Mischung mit einem weitestgehend neutralen pH-Wert entsteht.

Die zugegebenen Säuren oder Laugen werden dabei verbraucht und stehen für weitere Anwendungen nicht mehr zu Verfügung. Die zugegebenen Säuren oder Laugen stellen einen erheblichen Kostenfaktor dar.

Die entstandene neutrale Lösung weist eine hohe Salzfracht auf und kann nur bedingt weiterverwendet werden, da durch eine Rückführung im Kreislauf die Salzfracht akkumuliert wird, was die Leitfähigkeit der wässrigen Lösung erhöht. Damit gehen Probleme, wie beispielsweise erhöhte Korrosivität der Lösung oder mineralische Ablagerungen an Bauteilen, einher.

Bislang wurden die neutralisierten Lösungen über das Abwassernetz entsorgt und sind dadurch für die Weiterverwertung verloren.

Es ist bekannt, mithilfe der Elektrodialyse die Salzfracht wässriger Lösungen abzutrennen beziehungsweise aufzutrennen und in Säuren und Laugen zu überführen. Dabei geht ein Teil der für die Elektrodialyse benötigten elektrischen Energie geht, weil nach dem Stand der Technik an den Elektroden einer elektrochemischen Zelle Elektrolysegase entstehen.

Für die Erzeugung der Elektrolysegase wird eine sogenannte Überspannung an den Elektroden benötigt. Das Elektrolysegas entweicht ungenutzt aus der Zelle oder wird separat in einer nachgeordneten Brennstoffzelle verstromt (siehe dazu die US 2007/008 47 28 A1). Dieser Teil der Energie steht nicht mehr für die Auftrennung der Salzlösung zur Verfügung. Daher sind der Wirkungsgrad und damit die Wirtschaftlichkeit von Elektrodialyseanlagen gering.

Aus der DE 42 31 028 A1 ist ein Verfahren bekannt zur Aufbereitung der bei der Oberflächenbehandlung von Abwässern anfallenden wässrigen Flüssigkeiten.

Aus der DE 43 10 365 C1 ist ein Verfahren bekannt bei dem wässrige Ätzbäder von Metallen mittels Elektrodialyse regeneriert werden. Weiterhin ist aus US 2012/279861 A ein Verfahren zum Entsalzen von Salzwasser bekannt, bei dem die wässrige Lösung einer Elektrodialyse unterzogen wird. Entsprechendes ist auch aus der US 6,402,917 B sowie der US 3,893,901 entnehmbar.

Die vorliegende Erfindung stellt ein Verfahren und eine Vorrichtung bereit, die den Wirkungsgrad der Elektrodialyse erhöhen und somit eine bessere Nutzung der dafür eingesetzten elektrischen Energie gewährleisten. Eine Grundidee der Erfindung ist es, das in einer elektrochemischen Zelle an einer ersten Elektrode entstehende Elektrolysegas direkt an einer zweiten Elektrode der elektrochemischen Zelle umzusetzen. Bei den entstehenden Elektrolysegasen handelt es sich in der Regel um elementaren Sauerstoff (O₂) und elementaren Wasserstoff (H₂). Wobei der Sauerstoff an einer positiven Elektrode, der Anode, und Wasserstoff an einer negativen Elektrode, der Kathode, gebildet wird.

Somit ergeben sich zwei Ausgestaltungen des erfindungsgemäßen Verfahrens:
In einer ersten Ausgestaltung entsteht an der ersten Elektrode (Anode), die in einem ersten Elektrodenraum der elektrochemischen Zelle angeordnet ist und dem eine basische Elektrolytlösung, beispielsweise Natronlauge, zugeführt wird, nach folgender Gleichung Sauerstoff:

   2H2O => 02 + 4H+ + 4e- Gleichung (1)

Der Sauerstoff (02) wird zusammen mit dem wässrigen Elektrolyt, das dem ersten Elektrodenraum zugegeben wird, in einen zweiten Elektrodenraum gefördert. Die entstandenen Ionen, in dieser ersten Ausgestaltung sind es Protonen (H+), gelangen über einen Membranstapel, der den ersten Elektrodenraum von dem zweiten Elektrodenraum trennt, in den zweiten Elektrodenraum.

Der Membranstapel setzt sich aus einer Vielzahl ionenaustauschender Membranen zusammen und ist dazu geeignet, die ionischen Bestandteile aus der zu entsalzenden wässrigen Lösung abzutrennen und entsprechend ihrer Ladung zu sortieren.

An einer zweiten Elektrode (Kathode), die im zweiten Elektrodenraum angeordnet ist, läuft eine elektrochemische Reaktion nach folgender Gleichung ab:

O₂ + 4H⁺ + 4e⁻ => 2H₂O Gleichung (2)

Somit werden das an der ersten Elektrode (Anode) entstandene Elektrolysegas (Sauerstoff) und die Ionen (H⁺) an der zweiten Elektrode (Kathode) im Wesentlichen vollständig zu Wasser (H₂O) umgesetzt.

Die pH-Werte der Elektrolytlösung und die Standardpotentiale der Reaktionspartner sind im ersten Elektrodenraum (Anodenraum) und im zweiten Elektrodenraum (Kathodenraum) annähernd gleich groß.

Die aufzuwendende Gleichspannung summiert sich aus den Beträgen von anodischer Überspannung, kathodischer Überspannung und dem Spannungsabfall über den Membranstapel.

Die aufzuwendende elektrische Energie ist geringer, als bei einer Kombination aus einer Elektrodialysezelle mit einer nachgeordneten Brennstoffzelle.

Um den im wässrigen Elektrolyt enthaltenen gasförmigen Sauerstoff an der Kathode (zweite Elektrode) weitestgehend vollständig zu Wasser umzusetzen, ist es erforderlich, dass die Kathode über eine möglichst große Oberfläche verfügt.

Die Kathode ist beispielsweise aus Nickelschaum oder platiniertem Nickelschaum gefertigt.

In einer zweiten Ausgestaltung entsteht an der ersten Elektrode (Kathode), die in einem ersten Elektrodenraum der elektrochemischen Zelle angeordnet ist und dem eine wässrige basisches Elektrolytlösung, beispielsweise Natronlauge, zugeführt wird, nach folgender Gleichung Wasserstoff:

2H₂O + 2e- => H₂ + 2OH⁻ Gleichung (3)

Der Wasserstoff (H₂) wird zusammen mit dem wässrigen Elektrolyt, das dem ersten Elektrodenraum zugegeben wird, in einen zweiten Elektrodenraum gefördert. Die entstandenen Ionen, in dieser zweiten Ausgestaltung Hydroxidionen (OH⁻) gelangen über den Membranstapel, der den ersten Elektrodenraum von dem zweiten Elektrodenraum trennt, in den zweiten Elektrodenraum.

Der Membranstapel setzt sich aus einer Vielzahl ionenaustauschender Membranen zusammen und ist dazu geeignet, die ionischen Bestandteile aus der zu entsalzenden wässrigen Lösung abzutrennen und entsprechen ihrer Ladung zu sortieren.

An einer zweiten Elektrode (Anode), die im zweiten Elektrodenraum angeordnet ist, läuft eine elektrochemische Reaktion nach folgender Gleichung ab:

H₂ + 2OH⁻ => 2H₂O + 2e- Gleichung (4)

Somit werden das an der ersten Elektrode (Kathode) entstandene Elektrolysegas (Wasserstoff) und die Ionen (OH⁻) an der zweiten Elektrode (Anode) im Wesentlichen vollständig zu Wasser (H₂O) umgesetzt.

Die pH-Werte der Elektrolytlösung und die Standardpotentiale der Reaktionspartner sind im ersten Elektrodenraum (Kathodenraum) und im zweiten Elektrodenraum (Anodenraum) annähernd gleich groß.

Die aufzuwendende Gleichspannung summiert sich aus den Beträgen von anodischer Überspannung, kathodischer Überspannung und dem Spannungsabfall über den Membranstapel. Die anodische Überspannung und die kathodische Überspannung an den Elektroden sind nicht größer als die, die in einer separaten Brennstoffzelle auftreten würden.

Die aufzuwendende elektrische Energie ist geringer, als bei einer Kombination aus einer Elektrodialysezelle mit einer nachgeordneten Brennstoffzelle.

Um den im wässrigen Elektrolyt enthaltenen gasförmigen Wasserstoff an der Anode (zweiten Elektrode) weitestgehend vollständig zu Wasser umzusetzen, ist es erforderlich, dass die Anode über eine möglichst große Oberfläche verfügt.

Die Anode ist beispielsweise aus Nickelschaum oder platiniertem Nickelschaum gefertigt.

Weiterhin wird eine Vorrichtung vorgeschlagen, die geeignet ist, das erfindungsgemäße Verfahren in seiner ersten oder zweiten Ausgestaltung durchzuführen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigen:
Figur 1 elektrochemischen Zelle zur Durchführung einer ersten Ausgestaltung des erfindungsgemäßen Verfahrens;
Figur 2 elektrochemischen Zelle zur Durchführung einer zweiten Ausgestaltung des erfindungsgemäßen Verfahrens;

Es werden für funktionsäquivalente Elemente und Größen in allen Figuren auch bei unterschiedlichen Ausführungsformen die gleichen Bezugszeichen verwendet.

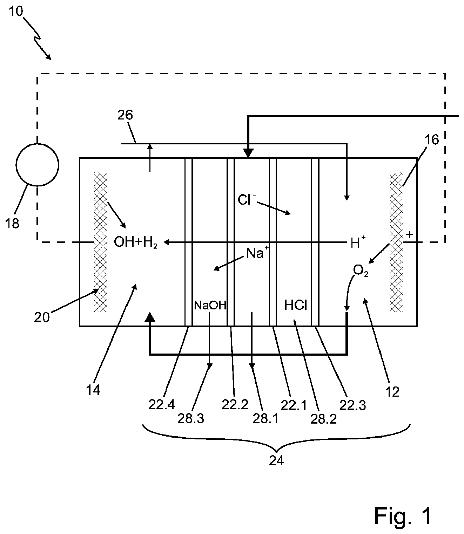

Figur 1 zeigt in schematischer Darstellung eine elektrochemische Zelle 10. Die elektrochemische Zelle 10 umfasst einen ersten Elektrodenraum 12 und einen zweiten Elektrodenraum 14. Im ersten Elektrodenraum 14 ist eine erste Elektrode 16 angeordnet. Die erste Elektrode 16 ist über eine elektrische Gleichspannungsquelle 18 mit einer zweiten Elektrode 20 elektrisch verbunden.

Die zweite Elektrode 20 ist im zweiten Elektrodenraum 14 angeordnet. Der zweite Elektrodenraum 14 ist von dem ersten Elektrodenraum 12 durch einen, mehrere Membranen 22 umfassenden, Membranstapel 24 räumlich getrennt. Beide Elektrodenräume 12,14 sind von einer wässrigen Elektrolytlösung durchströmt. Dazu wird die Elektrolytlösung dem ersten Elektrodenraum 12 zugeführt, um von dort in den zweiten Elektrodenraum 14 gefördert zu werden.

Aus dem zweiten Elektrodenraum 14 wird die Elektrolytlösung in den ersten Elektrodenraum 12 zurückgefördert. Eine Abzweigung 26 bietet die Möglichkeit, verbrauchte Elektrolytlösung zu ersetzen.

Die Membranen 22 im Membranstapel 24 sind von voneinander beabstandet angeordnet, so dass sich zwischen zwei benachbarten Membranen Kanäle 28 ausbilden. Ein zentraler Kanal 28.1 ist dazu eingerichtet, mit einer zu entsalzenden, wässrigen Lösung, beispielsweise mit einer Natriumchloridlösung, beaufschlagt zu werden.

Ist die Gleichstromquelle 18 so geschaltet, dass die erste Elektrode 16 eine positive Polung (Anode) und die zweite Elektrode 20 eine negative Polung (Kathode) aufweist, wandern in der wässrigen Lösung enthaltenen Anionen, beispielsweise Cl⁻ aus dem zentralen Kanal 28.1 durch die Membran 22.1 in Richtung der positiv gepolten ersten Elektrode 16.

Die Anionen werden in einem Kanal 28.2, der zwischen der Membran 22.1 und der Membran 22.3 ausgebildet ist, von der Membran 22.3 zurückgehalten und werden von dort zusammen mit Protonen (H⁺) als Säure, in diesem Anwendungsbeispiel als Salzsäure, abgezogen.

Die in der wässrigen Lösung enthalten Kationen, beispielsweise Na⁺, wandern hingegen durch die Membran 22.2 in Richtung der negativ gepolten zweiten Elektrode 20. Die Kationen werden in einem Kanal 28.3, der zwischen der Membran 22.2 und der Membran 22.4 ausgebildet ist, von der Membran 22.4 zurückgehalten und werden von dort zusammen mit Hydroxidionen (OH⁻) als Lauge, in diesem Anwendungsbeispiel als Natronlauge, abgezogen.

Nachdem die in der zu entsalzenden wässrigen Lösung enthaltenen Ionen durch die Membranen 22 in benachbarte Kanäle 28.2 oder 28.3 diffundiert sind, kann aus dem zentralen Kanal 28.1 entsalzte Flüssigkeit, hier beispielsweise Wasser, entnommen werden.

Die zwischen den Elektroden 16, 20 angelegte elektrische Spannung bewirkt auch, dass an der positiven ersten Elektrode 16 folgende, elektrolytische Reaktion abläuft:

2H₂O => O₂ + 4H⁺ + 4e- Gleichung (1)

Die als Ionen entstandenen Protonen H⁺ wandern durch den Membranstapel 24 zur negativen zweiten Elektrode 20.

Der als Elektrolysegas entstandene, elementare Sauerstoff (O₂) wird zusammen mit der Reinigungslösung aus der ersten Elektrodenkammer 12 in die zweite Elektrodenkammer 14 gefördert. Somit kann an der, dort angeordneten negativen, zweiten Elektrode 20 folgende Reaktion stattfinden:

O₂ + 4H⁺ + 4e- => 2H₂O Gleichung (2)

Das Elektrolysegas (elementarer Sauerstoff, O₂) wird in der zweiten Elektrodenkammer 14 mit dem an der positiven ersten Elektrode entstanden Ion (Proton, H⁺) unter der Aufnahme von Elektronen (e⁻) zu Wasser (H₂O umgesetzt.

Damit das in der Reinigungslösung enthalten Elektrolysegas möglichst vollständig umgesetzt wird, ist es bevorzugt, eine zweite Elektrode 20 einzusetzen, die eine möglichst große Oberfläche aufweist.

Ein denkbares Elektrodenmaterial für die zweite Elektrode 20 ist Nickelschaum, der auch mit Platin versehen sein kann.

Die pH-Werte im ersten Elektrodenraum und im zweiten Elektrodenraum sind annähernd gleich groß.

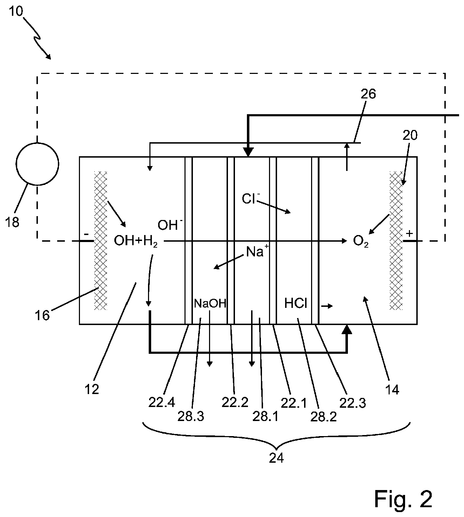

Figur 2 zeigt die elektrochemische Zelle 10 aus der Figur 1. Im Gegensatz zur Figur 1 ist hier jedoch die Gleichspannungsquelle 18 so geschaltet, dass die erste Elektrode 16 eine negative Polung und die zweite Elektrode 20 eine positive Polung aufweist.

Die angelegte elektrische Spannung bewirkt, dass im ersten Elektrodenraum 14 an der negativ geladenen ersten Elektrode das Wasser des darin enthaltenen basischen Elektrolyten wie folgt dissoziiert:

2H₂O + 2e- => H₂ + 2OH⁻ Gleichung (3)

Als Elektrolysegas entsteht bei der hier dargestellten zweiten Ausgestaltung des erfindungsgemäßen Verfahrens elementarer Wasserstoff (H₂), der zusammen mit dem wässrigen Elektrolyt in die zweite Elektrodenkammer gefördert wird. Die in der ersten Elektrodenkammer entstandenen Ionen (Hydroxidionen, OH⁻) wandern durch den Membranstapel zur positiven, zweiten Elektrode 20.

Begünstigt durch die basische Elektrolytlösung, läuft, an der positiven, zweiten Elektrode 20, folgende Reaktion ab:

H₂ + 2OH⁻ => 2H₂O + 2e- Gleichung (4)

Das Elektrolysegas (elementarer Wasserstoff, H₂) wird in der zweiten Elektrodenkammer 14 mit dem, an der negativen ersten Elektrode 16 entstanden Ion (Hydroxidion, OH⁻) unter Abgabe von Elektronen (e⁻) zu Wasser (H₂O umgesetzt.

Damit das in der Reinigungslösung enthalten Elektrolysegas möglichst vollständig umgesetzt wird, ist es bevorzugt, eine zweite Elektrode 20 einzusetzen, die eine möglichst große Oberfläche aufweist.

Ein denkbares Elektrodenmaterial für die zweite Elektrode 20 ist Nickelschaum, der auch mit Platin versehen sein kann.

Die pH-Werte im ersten Elektrodenraum und im zweiten Elektrodenraum sind annähernd gleich groß.

## Patentansprüche

1. Verfahren zur Entsalzung wässriger Lösungen mittels Elektrodialyse in einer elektrochemischen Zelle (10) umfassend ein erste Elektrode (16) und eine zweite Elektrode (20) und die zweite Elektrode (20) eine der ersten Elektrode entgegengesetzte Polung aufweist, wobei zwischen der ersten Elektrode (16) und der zweiten Elektrode (20) zwei Membranen (22.3 und 22.4) vorgesehen sind, wobei an der ersten Elektrode (16) ein Elektrolysegas und Ionen entstehen, **dadurch gekennzeichnet, dass** das Elektrolysegas und die Ionen an der zweiten Elektrode (20) umgesetzt werden, dass die in der wässrigen Lösung enthaltenen Anionen durch eine erste weitere Membran (22.1) in Richtung der positiv gepolten ersten Elektrode (16) wandern, und dass die in der wässrigen Lösung enthaltenen Kationen durch eine zweite weitere Membran (22.2) in Richtung der negativ gepolten zweiten Elektrode (20) wandern, und dass die zweite Elektrode (20) aus Nickelschaum oder platiniertem Nickelschaum besteht.

2. Verfahren nach Anspruch 1, **dadurch gekennzeichnet, dass** das Elektrolysegas mit einer wässrigen Elektrolytlösung von einem ersten Elektrodenraum (12) in einen zweiten Elektrodenraum (14) gefördert wird.

3. Verfahren nach einem der vorangehenden Ansprüche, **dadurch gekennzeichnet, dass** die an der ersten Elektrode (16) entstandenen Ionen, durch einen Membranstapel (24) der elektrochemischen Zelle (10) von dem ersten Elektrodenraum (12) in den zweiten Elektrodenraum (14) gelangen.

4. Verfahren nach einem der vorangehenden Ansprüche, **dadurch gekennzeichnet, dass** das an der ersten Elektrode (16) entstehende Elektrolysegas elementaren Sauerstoff (O₂) und die Ionen Protonen (H⁺) umfassen.

5. Verfahren nach einem der vorangehenden Ansprüche, **dadurch gekennzeichnet, dass** das an der ersten Elektrode (16) entstehende Elektrolysegas elementaren Wasserstoff (H₂) und die Ionen Hydroxidionen (OH⁻) umfassen.

6. Vorrichtung zur Entsalzung wässriger Lösungen mittels Elektrodialyse, nach einem Verfahren nach einem der vorangehenden Ansprüche, umfassend eine elektrochemische Zelle (10), die einen ersten Elektrodenraum (12) und einen zweiten Elektrodenraum (14) aufweist, wobei der erste Elektrodenraum (12) von dem zweiten Elektrodenraum (14) durch eine Membranstapel (24) getrennt ist und wobei im ersten Elektrodenraum (12) eine erste Elektrode (16) und im zweiten Elektrodenraum (14) eine zweite Elektrode (20) angeordnet ist und wobei die beiden Elektroden (16, 20) eine jeweils entgegengesetzte Polung aufweisen, **dadurch gekennzeichnet, dass** die Vorrichtung Mittel aufweist, die dazu geeignet sind, eine wässrige Elektrolytlösung, die dem ersten Elektrodenraum (12) zugeführt wird, zusammen mit dem an der ersten Elektrode (16) entstehende Elektrolysegas, von dem ersten Elektrodenraum (12) in den zweiten Elektrodenraum (14) zu fördern, dass der Membranstapel (24) vier Membrane (22.1 bis 22.4) umfasst, dass eine erste Membran (22.1) und eine zweite Membran (22.2) einen zentralen Kanal (28.1) begrenzen, dass die dritte Membran (22.3) zwischen der ersten Membran (22.1) und der positiven Elektrode (16) angeordnet ist, und dass die vierte Membran (22.4) zwischen der zweiten Membran (22.2) und der negativen Elektrode (20) angeordnet ist, und dass die zweite Elektrode (20) aus Nickelschaum oder platiniertem Nickelschaum besteht.

7. Vorrichtung nach Anspruch 6, **dadurch gekennzeichnet, dass** sie einen Membranstapel (24) aufweist, der für die Ionen, die an der ersten Elektrode (16) entstehen, durchlässig ist.

## Claims

1. A method for desalting aqueous solutions by means of electrodialysis in an electrochemical cell (10) comprising a first electrode (16) and a second electrode (20) and the second electrode (20) has a polarity opposite to the first electrode, whereas two membranes (22.3 and 22.4) are arranged between the first electrode (16) and the second electrode (20), wherein at the first electrode (16) an electrolysis gas and ions are formed, **characterized in that** the electrolysis gas and the ions are reacted at the second electrode (20), the anions contained in the aqueous solution migrate through another first membrane (22.1) in the direction of the first electrode (16) of positive polarity and that the cations contained in the aqueous solution migrate through another second membrane (22.2) in the direction of the second electrode (20) with negative polarity and that the second electrode (20) is made of nickel foam or platinum-plated nickel foam.

2. The method according to claim 1, **characterized in that** the electrolysis gas is conveyed with an aqueous electrolyte solution from a first electrode chamber (12) to a second electrode chamber (14).

3. The method according to one of the preceding claims, **characterized in that** ions formed at the first electrode (16) reach through a membrane stack (24) of the electrochemical cell (10) from the first electrode chamber (12) into the second electrode chamber (14).

4. The method according to one of the preceding claims, **characterized in that** the electrolysis gas formed at the first electrode (16) comprises elemental oxygen (O₂) and the ions comprise protons (H⁺).

5. The method according to one of the preceding claims, **characterized in that** the electrolysis gas formed at the first electrode (16) comprises elemental hydrogen (H₂) and the ions comprise hydroxide ions (OH⁻).

6. A device for desalting aqueous solutions by means of electrodialysis according to a method according to one of the preceding claims, comprising an electrochemical cell (10) having a first electrode chamber (12) and a second electrode chamber (14), wherein the first electrode chamber (12) is separated from the second electrode chamber (14) by a membrane stack (24), and wherein a first electrode (16) is arranged in the first electrode chamber (12) and a second electrode (20) is arranged in the second electrode chamber (14) and wherein the two electrodes have opposite polarity, **characterized in that** the device comprises means which are suitable to convey an aqueous electrolyte solution which is supplied to the first electrode chamber (12) together with the electrolysis gas formed at the first electrode (16) from the first electrode chamber (12) into the second electrode chamber (14), the membrane stack (24) comprises four membranes (22.1 to 22.4), that a first membrane (22.1) and a second membrane (22.2) define a central channel (28.1), that the third membrane (22.3) is arranged between the first membrane (22.1) and the first electrode (16), and that the fourth membrane (22.4) is arranged between the second membrane (22.2) and the second electrode (20) and that the second electrode (20) is made of nickel foam or platinum-plated nickel foam.

7. The device according to claim 6, **characterized in that** it has a membrane stack (24) which is permeable to the ions formed at the first electrode (16).

## Revendications

1. Procédé pour dessaler des solutions aqueuses par électrodialyse dans une cellule électrochimique (10) comprenant une première électrode (16) et une seconde électrode (20), et la seconde électrode (20) présentant une polarité opposée à la première électrode, dans lequel deux membranes (22.3 et 22.4) sont prévues entre la première électrode (16) et la seconde électrode (20), dans lequel un gaz d'électrolyse et des ions se forment au niveau de la première électrode (16), **caractérisé en ce que** le gaz d'électrolyse et les ions sont mis à réagir au niveau de la seconde électrode (20), **en ce que** les anions contenus dans la solution aqueuse migrent à travers une première membrane supplémentaire (22.1) dans la direction de la première électrode de polarité positive (16), et **en ce que** les cations contenus dans la solution aqueuse migrent à travers une deuxième membrane supplémentaire (22.2) dans la direction de la seconde électrode de polarité négative (20), et **en ce que** la seconde électrode (20) est en mousse de nickel ou mousse de nickel platiné.

2. Procédé selon la revendication 1, **caractérisé en ce que** le gaz d'électrolyse est transporté avec une solution électrolytique aqueuse à partir d'une première chambre d'électrode (12) jusque dans une seconde chambre d'électrode (14).

3. Procédé selon l'une quelconque des revendications précédentes, **caractérisé en ce que** les ions formés au niveau de la première électrode (16) passent à travers un empilement de membranes (24) de la cellule électrochimique (10) à partir de ladite première chambre d'électrode (12) jusque dans la seconde chambre d'électrode (14).

4. Procédé selon l'une quelconque des revendications précédentes, **caractérisé en ce que** le gaz d'électrolyse formé au niveau de la première électrode (16) comprend de l'oxygène élémentaire (O₂), et les ions comprennent des protons (H⁺).

5. Procédé selon l'une quelconque des revendications précédentes, **caractérisé en ce que** le gaz d'électrolyse formé au niveau de la première électrode (16) comprend de l'hydrogène élémentaire (H₂), et les ions comprennent des ions hydroxyde (OH⁻).

6. Dispositif pour dessaler des solutions aqueuses par électrodialyse, par l'intermédiaire d'un procédé selon l'une quelconque des revendications précédentes, comprenant une cellule électrochimique (10) qui présente une première chambre d'électrode (12) et une seconde chambre d'électrode (14), dans lequel la première chambre d'électrode (12) et la seconde chambre d'électrode (14) sont séparées par un empilement de membranes (24), et dans lequel une première électrode (16) est agencée dans la première chambre d'électrode (12) et une seconde électrode (20) est agencée dans la seconde chambre d'électrode (14), et dans lequel les deux électrodes (16, 20) présentent chacune une polarité opposée, **caractérisé en ce que** le dispositif comprend des moyens qui sont prévus pour transporter une solution électrolytique aqueuse, qui alimente la première chambre d'électrode (12), ainsi que le gaz d'électrolyse formé au niveau de la première électrode (16), depuis la première chambre d'électrode (12) vers la seconde chambre d'électrode (14), **en ce que** l'empilement de membranes (24) comprend quatre membranes (22.1 à 22.4), **en ce qu'**une première membrane (22.1) et une deuxième membrane (22.2) délimitent un canal central (28.1), **en ce que** la troisième membrane (22.3) est agencée entre la première membrane (22.1) et l'électrode positive (16), et **en ce que** la quatrième membrane (22.4) est agencée entre la deuxième membrane (22.2) et l'électrode négative (20), et **en ce que** la seconde électrode (20) est en mousse de nickel ou mousse de nickel platinée.

7. Dispositif selon la revendication 6, **caractérisé en ce qu'**il comprend un empilement de membranes (24), qui est perméable pour les ions formés au niveau de la première électrode (16).
